# EUROPEAN PATENT SPECIFICATION

(11) **EP 3 483 332 B1**
(45) Date of publication and mention of the grant of the patent: **14.10.2020**
(21) Application number: 18204531.0
(22) Date of filing: 06.11.2018
(51) Int. Cl.: D06F 33/30, D06F 101/14, D06F 103/38, D06F 105/44, D06F 39/14

(54) **CONTROL METHOD AND DEVICE FOR DOOR LOCK OF SELF-SERVICE WASHING MACHINE AND COMPUTER STORAGE MEDIUM**
STEUERUNGSVERFAHREN UND -VORRICHTUNG FÜR TÜRSCHLOSS EINER SELBSTBEDIENUNGSWASCHMASCHINE UND COMPUTERSPEICHERMEDIUM
PROCÉDÉ DE COMMANDE ET DISPOSITIF DE VERROUILLAGE DE PORTE DE MACHINE À LAVER EN LIBRE-SERVICE ET SUPPORT D'ENREGISTREMENT INFORMATIQUE

(30) Priority: 08.11.2017 CN 201711088783
(43) Date of publication of application: 15.05.2019
(73) Proprietor: BSH Hausgeräte GmbH, 81739 München (DE)
(72) Inventor: Li, Chao, Nanjing City, 210014 (CN); Mu, Jinhong, Nanjing 210096 (CN)

(56) References cited:
- CN-U- 204 803 609
- TW-A- 201 409 368

## Description

### BACKGROUND

### Technical Field

The present invention relates to the field of control technologies of public washing machines, and specifically, to a control method and device for a door lock of a washing machine and a computer storage medium.

### Related Art

Publication TW 201 409 368 A discloses a self-service laundry process management method.

Utility model CN 204 803 609 U discloses an automatic time delay system of locking a door of a public self-service washing machine.

The self-service washing industry currently enters people's daily life. Self-service laundries already rise quietly in densely inhabited districts such as large-scale residence communities, bachelor apartments, and schools. Control technologies, such as code scanning control and remote control, of self-service washing machines emerge endlessly as well. However, an existing self-service washing machine still has the following problem. That is, after a current washing procedure ends, door locks of some washing machines in laundries automatically unlock, and a user cannot remove washed clothes in time for various reasons. Consequently, the clothes may occupy the washing machines or be lost.

For the problems above, at present, no effective solution is proposed.

### SUMMARY

Embodiments of the present invention provide a control method and device for a door lock of a washing machine and a computer storage medium, to resolve at least a problem that a self-service washing machine cannot be efficiently used.

To resolve the foregoing problem, the present invention provides a control method for a door lock of a self-service washing machine, as defined in claim 1, and a control device for a door lock of a self-service washing machine, as defined in claim 6. The method is applied to a server, and includes the following steps: receiving a delay time for opening a door that is sent by a client, where the delay time for opening the door refers to a time after a washing procedure ends; determining, after a washing event ends, whether the delay time for opening the door expires; and receiving, when the delay time for opening the door does not expire, an unlocking instruction sent by the client, and controlling, according to the instruction, the washing machine to unlock the door lock. According to the method, a washing machine in a laundry can be efficiently used. If a user does not remove clothes in time after washing ends, the user needs to reserve a delay time for continuing to occupy the washing machine and pay for the delay time.

The delay time for opening the door may be pre-purchased by using the client. A purchase time may be any time period before a current washing procedure ends, including a time period when reserving washing and a time period during washing.

Preferably, reminding information is sent to the client before the delay time for opening the door expires, to remind the user whether a delay time needs to be purchased; and the time is extended before the delay time for opening the door expires, to satisfy a requirement of the user for increasing the delay time, thus more flexibly setting the delay time.

Preferably, the door lock is unlocked before the delay time for opening the door expires. The server calculates a remaining delay time for opening the door, and returns expense corresponding to the remaining time, thus returning the expense corresponding to the time not used.

When the delay time expires, the server controls the washing machine to unlock the door lock.

The embodiments of the present invention further provide a control device for a door lock of a washing machine, including: a receiving module, configured to receive a delay time for opening a door that is sent by a client, where the delay time for opening the door refers to a time after a washing procedure ends; a determining module, configured to determine, after a washing event ends, whether the delay time for opening the door expires; and a control module, configured to receive, when the delay time for opening the door does not expire, an unlocking instruction sent by the client, and control, according to the instruction, the washing machine to unlock the door lock.

Preferably, the receiving module is further configured to receive a delay time for opening the door that is purchased by the client.

The device further includes a reminding module, configured to send reminding information to the client before the delay time for opening the door expires.

The device further includes an extension module, configured to increase the delay time for opening the door before the delay time for opening the door expires.

Preferably, the control module is further configured to control, when the delay time already expires, the washing machine to unlock the door lock. The device further includes a settlement module, configured to calculate, after the washing machine unlocks the door lock, a remaining delay time for opening the door, and return expense corresponding to the remaining time.

The embodiments of the present invention further provide a computer storage medium. The computer storage medium can store a program. The program can execute the foregoing method.

Compared with the prior art, the technical solution of the present invention has the following advantages:
By using the foregoing solution, after a washing procedure of a self-service washing machine ends, the washing machine can be provisionally occupied with compensation according to a reserved delay time, and others cannot unlock a door lock in the reserved time, thus reducing phenomena in which clothes are not removed in time and therefore lost.

### BRIEF DESCRIPTION OF THE DRAWINGS

The disclosure will become more fully understood from the detailed description given herein below for illustration only, and thus are not limitative of the disclosure, and wherein:
FIG. 1 is a schematic diagram of a system network applied to an embodiment of the present invention;
FIG. 2 is a flow chart of a method according to an embodiment of the present invention;
FIG. 3 is a flow chart of a specific implementation method according to an embodiment of the present invention; and
FIG. 4 is a block diagram of a device according to an embodiment of the present invention.

### DETAILED DESCRIPTION

The following describes the present invention in detail with reference to accompanying drawings and embodiments. It should be noted that, in a case that no conflict occurs, the embodiments in this application and features in the embodiments may be mutually combined.

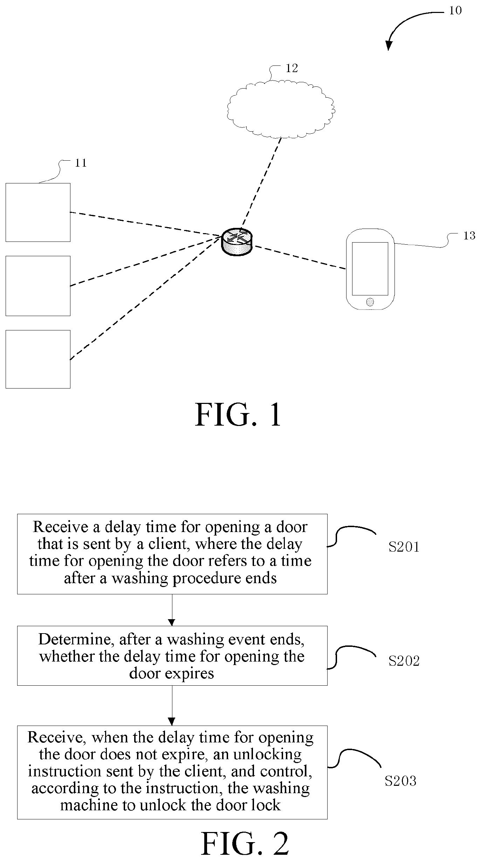

An embodiment of the present invention is based on a management system 10 of a self-service washing machine that is shown in FIG. 1. The system includes a washing device 11, a server 12, and a client 13. The washing device 11 is disposed in a laundry and is configured to perform at least one of a washing operation or a drying operation. The washing device 11 is mainly a washing machine, a drying machine, a washing/drying machine, or the like. A communications module is disposed on the washing device, and may be connected to the server in a wired or wireless manner, for example, connected to a remote server by using a network cable or a router.

The server 12 is mainly a cloud server, is in communication connection to the washing device, and manages and controls the washing device to work. The server manages and controls operation of all washing devices, can obtain status of and operation information of all the washing devices in real time, and can process information obtained from the client and the washing device, including processing a reserved time, processing a washing status, charging, and so on.

The client 13 is a mobile terminal, or may be a tablet computer, an intelligent terminal, a personal computer, or the like. An application (APP) is disposed on the client, can be in communication connection to the server, and can inquire about information about a washing machine in a vacant state that is provided by the server in real time, for example, inquire whether the washing machine is marked as "reserved". The APP can inquire about or receive a remaining time of a washing procedure, washing expense, or the like as well, and reserve, by using the client, a time after a current washing procedure ends, thus delaying removing clothes. In addition, the client may achieve a function of communicating with the server and the washing device by means of an existing application, for example, a WeChat applet.

Based on the foregoing management system of the washing machine, after a washing procedure reserved by a user ends, a door lock of the washing machine can be continuously controlled according to a delay time purchased by the user. The following describes a method in detail.

FIG. 2 provides a control method for a door lock of a washing machine. The method is applied to a server and includes the following steps:
S201: Receive a delay time for opening a door that is sent by a client, where the delay time for opening the door refers to a time after a washing procedure ends.
S202: Determine, after a washing event ends, whether the delay time for opening the door expires.
S203: Receive, when the delay time for opening the door does not expire, an unlocking instruction sent by the client, and control, according to the instruction, the washing machine to unlock the door lock.

The delay time for opening the door may be pre-purchased by using the client. A purchase time may be any time period before a current washing procedure ends, including a time period when reserving washing and a time period during washing.

Preferably, reminding information is sent to the client before the delay time for opening the door expires, to remind the user whether a delay time needs to be purchased; and the time is extended before the delay time for opening the door expires.

Preferably, if the door lock is unlocked before the delay time for opening the door expires, expense corresponding to a time not used can be returned. That is, the server calculates a remaining delay time for opening the door, and returns the expense corresponding to the remaining time.

In addition, when the delay time expires, the server controls the washing machine to unlock the door lock.

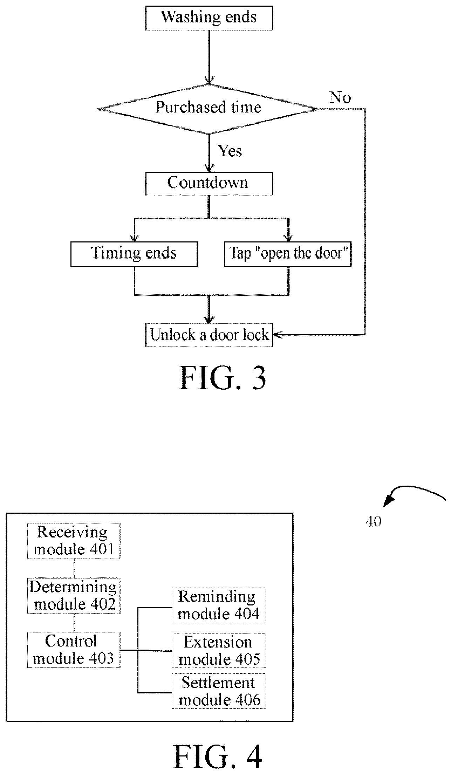

Descriptions are provided below with reference to a specific implementation manner. As show in FIG. 3, when using a self-service washing machine, a user may pre-purchase a time after a washing procedure ends, that is, a delay time for opening a door. After washing ends this time, the washing machine does not open the door provisionally. After the user taps an "open the door" button on a client, a cloud server sends an instruction to a communications module of the washing machine, to control the washing machine to unlock a door lock, and make it convenient for the user to remove clothes. After the time is purchased, a countdown timer starts to time after the washing procedure ends. If counting down ends and "open the door" is still not tapped, it is considered that the user quits management of the clothes, and the washing machine automatically opens the door, to make it convenient for other users to wash clothes. If the purchased time is not all used, the server reduces expense according to a remaining time and returns the expense to an original account of the user.

By using the foregoing method, after a washing procedure of a self-service washing machine ends, the washing machine can be provisionally occupied with compensation according to a reserved delay time, and others cannot unlock a door lock in the reserved time, thus reducing phenomena in which clothes are not removed in time and therefore lost.

As shown in FIG. 4, an embodiment of the present invention further provides a control device 40 for a door lock of a washing machine, including: a receiving module 401, configured to receive a delay time for opening a door that is sent by a client, where the delay time for opening the door refers to a time after a washing procedure ends; a determining module 402, configured to determine, after a washing event ends, whether the delay time for opening the door expires; and a control module 403, configured to receive, when the delay time for opening the door does not expire, an unlocking instruction sent by the client, and control, according to the instruction, the washing machine to unlock the door lock.

Preferably, the receiving module 401 is further configured to receive a delay time for opening a door that is purchased by the client.

The device 40 further includes a reminding module 404, configured to send reminding information to the client before the delay time for opening the door expires.

The device 40 further includes an extension module 405, configured to increase the delay time for opening the door before the delay time for opening the door expires.

Preferably, the control module 403 is further configured to control, when the delay time already expires, the washing machine to unlock the door lock.

The device 40 further includes a settlement module 406, configured to calculate, after the washing machine unlocks the door lock, a remaining delay time for opening the door, and return expense corresponding to the remaining time.

In addition, the self-service washing system can further achieve a disinfection cleaning procedure. The washing machine has a barrel cleaning procedure, and can effectively perform high temperature sterilization. A user may pay, before washing clothes of the user, to execute the barrel cleaning procedure to disinfect a barrel of the washing machine. After the barrel cleaning procedure is completed, the to-be-washed clothes are put into the barrel, and the washing procedure is executed.

The self-service washing system can also achieve remote fault detection. The washing machine includes a mechanical component and a sensor. During operation of the washing machine, a mainboard of the washing machine records, in real time, machine operation status data fed back by the mechanical component and the sensor. The communications module of the washing machine may read data in the mainboard, and upload the data to cloud. The cloud records all operation state data of the washing machine, and compares the data with standard data by using an algorithm. When the cloud detects that the state data of the washing machine already departs from a standard range, the cloud issues a warning to a system administrator. The system administrator performs corrective maintenance in time before the washing machine has a fault.

A person of ordinary skill in the art may understand that all or some of the steps of the methods in the embodiments may be completed by a program instructing relevant hardware. The program may be stored in a computer readable storage medium. The storage medium may include a ROM, a RAM, a magnetic disk, an optical disc, or the like.

The present invention is disclosed as above, but the present invention is not limited thereto. Any person skilled in the art may vary or modify the present invention, without departing from the scope of the present invention. Therefore, the protection scope of the present invention is defined by the claims.

## Claims

1. A control method for a door lock of a self-service washing machine (11), applied to a server (12), wherein the method comprises:
receiving (S201) a delay time for opening a door of the self-service washing machine (11), wherein the delay time for opening the door is sent by a client (13), and wherein the delay time for opening the door refers to a time to open the door after a washing procedure ends;
determining (S202), after the washing procedure ends, whether the delay time for opening the door expires; and
receiving (S203), when the delay time for opening the door does not expire, an unlocking instruction sent by the client (13), and controlling, according to the instruction, the washing machine (11) to unlock the door lock;
further comprising: controlling the self-service washing machine (11) to unlock the door lock, when the delay time for opening the door has already expired.

2. The method according to claim 1, **characterized in that**, receiving (S201) the delay time for opening the door that is sent by the client (13) comprises: receiving a delay time for opening the door that is purchased by the client (13).

3. The method according to claim 1 or 2, **characterized by** further comprising: sending reminding information to the client (13) before the delay time for opening the door expires.

4. The method according to claim 1 or 2, **characterized by** further comprising: extending the delay time for opening the door before the delay time for opening the door expires, when further delay time is purchased by the user.

5. The method according to claim 2, **characterized by** further comprising: calculating, after the washing machine (11) unlocks the door lock, a remaining delay time for opening the door, and returning expense corresponding to said remaining delay time.

6. A control device (40) for a door lock of a self-service washing machine (11), comprising:
a receiving module (401), configured to receive a delay time for opening a door that is sent by a client (13), wherein the delay time for opening the door refers to a time after a washing procedure ends;
a determining module (402), configured to determine, after the washing procedure ends,
whether the delay time for opening the door expires; and
a control module (403), configured to receive, when the delay time for opening the door is not expired, an unlocking instruction sent by the client (13), and control, according to the instruction, the washing machine to unlock the door lock;
wherein the control module (403) is further configured to control the self-service washing machine (11) to unlock the door lock, when the delay time for opening the door has already expired.

7. The control device (40) according to claim 6, **characterized in that**, the receiving module (401) is further configured to receive a further delay time for opening the door that is purchased by the client (13), before the delay time for opening the door is expired.

8. The control device (40) according to claim 6 or 7, **characterized by** further comprising a reminding module (404), configured to send reminding information to the client (13) before the delay time for opening the door expires.

9. The control device (40) according to claim 6 or 7, **characterized by** further comprising an extension module (405), configured to increase the delay time for opening the door before the delay time for opening the door expires.

10. The control device (40) according to claim 7, **characterized by** further comprising a settlement module (406), configured to calculate, after the washing machine (11) unlocks the door lock, a remaining delay time for opening the door, and return expense corresponding to said remaining delay time.

11. A computer storage medium, storing a program, and when the program is executed, a method according to any one of claims 1 to 5 is executed.

## Patentansprüche

1. Steuerverfahren für eine Türverriegelung einer Waschsalon-Waschmaschine (11) bei Anwendung auf einen Server (12), wobei das Verfahren Folgendes umfasst:
Empfangen (S201) einer Verzögerungszeit für das Öffnen einer Tür der Waschsalon-Waschmaschine (11), wobei die Verzögerungszeit für das Öffnen der Tür von einem Kunden (13) gesendet wird und einen Zeitpunkt betrifft, zu dem die Tür nach dem Ende eines Waschvorgangs geöffnet werden soll,
Bestimmen (S202) nach dem Ende des Waschvorgangs, ob die Verzögerungszeit für das Öffnen der Tür abläuft, und
Empfangen (S203) einer vom Kunden (13) gesendeten Entriegelungsanweisung, wenn die Verzögerungszeit für das Öffnen der Tür nicht abläuft, und derartiges Steuern der Waschmaschine (11) entsprechend der Anweisung, dass die Türverriegelung entriegelt wird,
ferner umfassend: das derartige Steuern der Waschsalon-Waschmaschine (11), dass die Türverriegelung entriegelt wird, wenn die Verzögerungszeit für das Öffnen der Tür bereits abgelaufen ist.

2. Verfahren nach Anspruch 1, **dadurch gekennzeichnet, dass** das Empfangen (S201) der vom Kunden (13) gesendeten Verzögerungszeit für das Öffnen der Tür Folgendes umfasst: Empfangen einer Verzögerungszeit für das Öffnen der Tür, die von dem Kunden (13) erworben wird.

3. Verfahren nach Anspruch 1 oder 2, **dadurch gekennzeichnet, dass** es ferner Folgendes umfasst: Senden von Erinnerungsinformationen an den Kunden (13), bevor die Verzögerungszeit für das Öffnen der Tür abläuft.

4. Verfahren nach Anspruch 1 oder 2, **dadurch gekennzeichnet, dass** es ferner Folgendes umfasst: Verlängern der Verzögerungszeit für das Öffnen der Tür, bevor diese abläuft, wenn vom Benutzer weitere Verzögerungszeit erworben wird.

5. Verfahren nach Anspruch 2, **dadurch gekennzeichnet, dass** es ferner Folgendes umfasst: Berechnen einer verbleibenden Verzögerungszeit für das Öffnen der Tür, wenn die Waschmaschine (11) die Türverriegelung entriegelt hat, und Zurückzahlen von der verbleibenden Verzögerungszeit entsprechenden Beträgen.

6. Steuervorrichtung (40) für eine Türverriegelung einer Waschsalon-Waschmaschine (11) mit:
einem Empfangsmodul (401), das so konfiguriert ist, dass es eine von einem Kunden (13) gesendete Verzögerungszeit für das Öffnen einer Tür empfängt, wobei die Verzögerungszeit für das Öffnen der Tür einen Zeitpunkt nach dem Ende eines Waschvorgangs betrifft,
einem Bestimmungsmodul (402), das so konfiguriert ist, dass es nach dem Ende des Waschvorgangs bestimmt, ob die Verzögerungszeit für das Öffnen der Tür abläuft, und
ein Steuermodul (403), das so konfiguriert ist, dass es eine vom Kunden (13) gesendete Entriegelungsanweisung empfängt, wenn die Verzögerungszeit für das Öffnen der Tür nicht abgelaufen ist, und die Waschmaschine entsprechend der Anweisung so steuert, dass die Türverriegelung entriegelt wird,
wobei das Steuermodul (403) ferner so konfiguriert ist, dass es die Waschsalon-Waschmaschine (11) so steuert, dass die Türverriegelung entriegelt wird, wenn die Verzögerungszeit für das Öffnen der Tür bereits abgelaufen ist.

7. Steuervorrichtung (40) nach Anspruch 6, **dadurch gekennzeichnet, dass** das Empfangsmodul (401) ferner so konfiguriert ist, dass es eine weitere Verzögerungszeit für das Öffnen der Tür empfängt, die vom Kunden (13) erworben wird, bevor die Verzögerungszeit für das Öffnen der Tür abgelaufen ist.

8. Steuervorrichtung (40) nach Anspruch 6 oder 7, **dadurch gekennzeichnet, dass** sie ferner ein Erinnerungsmodul (404) umfasst, das so konfiguriert ist, dass es Erinnerungsinformationen an den Kunden (13) sendet, bevor die Verzögerungszeit für das Öffnen der Tür abläuft.

9. Steuervorrichtung (40) nach Anspruch 6 oder 7, **dadurch gekennzeichnet, dass** sie ferner ein Erweiterungsmodul (405) umfasst, das so konfiguriert ist, dass es die Verzögerungszeit für das Öffnen der Tür verlängert, bevor diese abläuft.

10. Steuervorrichtung (40) nach Anspruch 7, **dadurch gekennzeichnet, dass** sie ferner ein Verrechnungsmodul (406) umfasst, das so konfiguriert ist, dass es eine verbleibende Verzögerungszeit für das Öffnen der Tür berechnet, wenn die Waschmaschine (11) die Türverriegelung entriegelt hat, und der verbleibenden Verzögerungszeit entsprechende Beträge zurückzahlt.

11. Computerspeichermedium, auf dem ein Programm gespeichert ist, und wenn das Programm ausgeführt wird, wird ein Verfahren nach einem der Ansprüche 1 bis 5 ausgeführt.

## Revendications

1. Procédé de commande du verrou de porte d'une machine à laver de libre-service (11), appliqué à un serveur (12), dans lequel le procédé comprend :
la réception (S201) d'un temps d'attente pour ouvrir la porte de la machine à laver de libre-service (11), dans laquelle le temps d'attente pour ouvrir la porte est envoyé par un client (13), et, dans laquelle
le temps d'attente pour ouvrir la porte se réfère au temps pour ouvrir la porte après qu'un processus de lavage s'est terminé;
la détermination (S202), après que le processus de lavage s'est terminé, si le temps d'attente pour ouvrir la porte a expiré ou non; et
la réception (S203), quand le temps d'attente pour ouvrir la porte n'a pas expiré, d'une instruction de déverrouillage envoyée par le client (13), et la commande, conforme à l'instruction, à la machine à laver (11) de déverrouiller le verrou de porte;
comprenant en outre : la commande à la machine à laver de libre-service (11) de déverrouiller le verrou de porte, quand le temps d'attente pour ouvrir la porte, a déjà expiré.

2. Procédé selon la revendication 1, **caractérisé en ce que** la réception (S201) du temps d'attente pour ouvrir la porte envoyé par le client (13) comprend : la réception d'un temps d'attente pour ouvrir la porte acheté par le client (13).

3. Procédé selon la revendication 1 ou 2, **caractérisé en ce qu'**il comprend en outre : l'envoi d'informations de rappel au client (13) avant que le temps d'attente pour ouvrir la porte n'expire.

4. Procédé selon la revendication 1 ou 2, **caractérisé en ce qu'**il comprend en outre :
la prolongation du temps d'attente pour ouvrir la porte avant que le temps d'attente pour ouvrir la porte n'expire, quand l'utilisateur achète un nouveau temps d'attente.

5. Procédé selon la revendication 2, **caractérisé en ce qu'**il comprend en outre : le calcul, après que la machine à laver (11) a déverrouillé le verrou de porte, d'un temps d'attente restant pour ouvrir la porte, et le remboursement de la dépense correspondant audit temps d'attente restant.

6. Dispositif de commande (40) pour le verrou de porte d'une machine à laver de libre-service (11), comprenant :
un module de réception (401) configuré pour recevoir un temps d'attente pour ouvrir une porte qui est envoyé par un client (13), dans lequel le temps d'attente pour ouvrir la porte se réfère à un temps après qu'un processus de lavage s'est terminé;
un module de détermination (402) configuré pour déterminer, après que le processus de lavage s'est terminé, si le temps d'attente pour ouvrir la porte a expiré; et
un module de commande (403), configuré pour recevoir, quand le temps d'attente pour ouvrir la porte, n'a pas expiré, une instruction de déverrouillage envoyée par le client (13), et la commande, conforme à l'instruction, à la machine à laver (11), de déverrouiller le verrou de porte;
dans lequel le module de commande (403) est en outre configuré pour commander à la machine à laver de libre-service (11) de déverrouiller le verrou de porte, quand le temps d'attente pour ouvrir la porte, a déjà expiré.

7. Dispositif de commande (40) selon la revendication 6, **caractérisé en ce que** le module de réception (401) est en outre configuré pour recevoir un nouveau temps d'attente pour ouvrir la porte, lequel est acheté par le client (13) avant que le temps d'attente pour ouvrir la porte n'ait expiré.

8. Dispositif de commande (40) selon la revendication 6 ou 7, **caractérisé en ce qu'**il comprend en outre un module de rappel (404) configuré pour envoyer des informations de rappel au client (13) avant que le temps d'attente pour ouvrir la porte n'ait expiré.

9. Dispositif de commande (40) selon la revendication 6 ou 7, **caractérisé en ce qu'**il comprend en outre un module de prolongation (405) configuré pour augmenter le temps d'attente pour ouvrir la porte avant que le temps d'attente pour ouvrir la porte n'ait expiré.

10. Dispositif de commande (40) selon la revendication 7, **caractérisé en ce qu'**il comprend en outre un module de liquidation (406) configuré pour calculer, après que la machine à laver (11) a déverrouillé le verrou de porte, le temps d'attente restant pour ouvrir la porte, et le remboursement de la dépense correspondant audit temps d'attente restant.

11. Support de stockage informatique stockant un programme, et quand le programme est exécuté, un procédé selon l'une quelconque des revendications 1 à 5 est exécuté.
